# EUROPÄISCHE PATENTSCHRIFT

(11) **EP 1 278 416 B1**
(45) Veröffentlichungstag und Bekanntmachung des Hinweises auf die Patenterteilung: **07.04.2004**
(21) Anmeldenummer: 01938088.0
(22) Anmeldetag: 05.04.2001
(51) Int. Cl.: A01N 47/36, A01N 25/30, A01N 25/22

(54) **FLÜSSIGE FORMULIERUNGEN**
LIQUID FORMULATIONS
FORMULATIONS LIQUIDES

(30) Priorität: 27.04.2000 DE 10020671
(43) Veröffentlichungstag der Anmeldung: 29.01.2003
(73) Patentinhaber: Aventis CropScience GmbH, 65929 Frankfurt am Main (DE)
(72) Erfinder: WÜRTZ, Jochen, 55411 Bingen am Rhein (DE); MAIER, Thomas, 65719 Hofheim (DE); SCHNABEL, Gerhard, 63820 Elsenfeld (DE); HAASE, Detlev, 65929 Frankfurt (DE)
(86) Internationale Anmeldenummer: PCT/EP2001/003879
(87) Internationale Veröffentlichungsnummer: WO 2001/082693

(56) Entgegenhaltungen:
- EP-A- 0 514 768
- EP-A- 0 554 015
- EP-A- 0 598 515
- US-A- 5 741 755
- US-A- 5 773 387
- DATABASE WPI Section Ch, Week 199648 Derwent Publications Ltd., London, GB; Class C02, AN 1996-484064 XP002178936 & SU 1 269 296 A (VALITOV R B), 10. März 1996 (1996-03-10)
- DATABASE WPI Section Ch, Week 199506 Derwent Publications Ltd., London, GB; Class A97, AN 1995-041131 XP002178937 & JP 06 321713 A (MITSUBISHI PETROCHEMICAL CO LTD), 22. November 1994 (1994-11-22)

## Beschreibung

Die Erfindung betrifft das Gebiet der flüssigen Formulierungen. Insbesondere betrifft die Erfindung flüssige Formulierungen herbizider Wirkstoffe aus der Gruppe der Inhibitoren der Acetolactat-Synthase (im folgenden ALS-Inhibitoren genannt), wie Sulfonylharnstoffe.

Im allgemeinen werden Wirkstoffe nicht als Reinstoffe, sondern je nach Anwendungsgebiet und gewünschter physikalischer Beschaffenheit der Anwendungsform in Kombination mit bestimmten Hilfsstoffen eingesetzt, d. h. sie werden "formuliert". Prinzipiell können Wirkstoffe auf unterschiedliche Art formuliert werden, je nachdem welche biologischen und/oder chemisch-physikalischen Parameter vorgegeben sind. Allgemein kommen als Formulierungsmöglichkeiten dafür beispielsweise in Betracht: Spritzpulver (WP), Öl-in-Wasser- bzw. Wasser-in-Öl-Emulsionen (EW bzw. EO), Suspensionen (SC), Suspoemulsionen (SE), emulgierbare Konzentrate (EC), wässrige Lösungen (SL) oder auch Granulate zur Boden- oder Streuapplikation bzw. wasserdispergierbare Granulate (WG). Die genannten Formulierungstypen sind im Prinzip bekannt und werden z. B. beschrieben in: Winnacker-Küchler, "Chemische Technologie", Band 7, C.Hauser-Verlag, München, 4.Auflage 1986; van Valkenburg, "Pesticide Formulations", Marcel-Dekker N.Y., 1973; K.Martens, "Spray Drying Handbook", 3rd Ed., 1979, G.Goodwin Ltd. London.

Handelt es sich bei den zu formulierenden Wirkstoffen um solche, die im gelösten Zustand bzw. in flüssigen Medien allgemein zum chemischen Abbau neigen, werden zumeist feste Formulierungen wie benetzbare Pulver oder Granulate bevorzugt. Wie in US4599412 und US5731264 beschrieben, trifft dies beispielsweise auf herbizide Wirkstoffe aus der Gruppe der ALS-Inhibitoren zu, wie Metsulfuronmethyl, Nicooder Rimsulfuron, Primisulfuronmethyl, Tria-, Pro-, Amido- oder Ethoxysulfuron. Entsprechend sind Pulverformulierungen bzw. Granulate dieser Herbizide - wie beispielsweise in WO9910857, WO9809516, WO9508265, US5441923, WO9423573, JP05017305, JP04297404, JP04297403 oder JP04066509 beschrieben - bereits bekannt.

Häufig wird beim Verdünnen derartiger Pulverformulierungen oder Granulate mit Wasser (zur Herstellung der Spritzbrühe) kein vollständiges Auflösen der im Konzentrat ungelösten Anteile erreicht, d. h. die Spritzbrühe ist eine Suspension des Konzentrates. Es ist jedoch stets von Vorteil, wenn Spritzbrühen so fein-dispers wie möglich vorliegen, da hierdurch die Verstopfungsgefahr für die Spritzdüsen und damit der Reinigungsaufwand allgemein vermindert wird. Außerdem sind Pulveroder Granulatformulierungen nur mit relativ großem Energieeintrag und technisch aufwendigen Rührwerkzeugen herstellbar, d.h. bereits bei ihrer Herstellung ergeben sich erhebliche Nachteile.

Flüssige Suspensionen von Herbiziden der vorstehend beschriebenen Art sind in Form von Suspensionskonzentraten zwar bereits bekannt (FR2576181, EP0205348, EP0237292 oder EP0246984). Die Wirkstoffe liegen jedoch auch im Falle von Suspensionen im nicht gelösten Zustand vor, so daß bei der Applikation der Spritzbrühe ähnliche Probleme auftreten wie im Falle der Pulverformulierungen oder Granulate. Außerdem stellen Suspensionskonzentrate (SC) und Suspoemulsionen (SE) thermodynamisch instabile Formulierungen mit eingeschränkter physikalischer Lagerstabilität dar.

EP-A-0 514 768 offenbart wässrige Dispersionen von Sulfonylharnstoffderivaten, die Polyacrylsäurederivate enthalten.

Tensidfreie wässrige Lösungen von Sulfonylhamstoffen sind in US4683000, US4671817 und EP0245058 beschrieben, wasserfreie emulgierbare Konzentrate sind in den Schriften DE3422824, US4632693, WO9608148 und US5597778 beschrieben.

In keiner dieser Schriften sind Hinweise zur Erhöhung zur Lagerstabilität der Formulierungen enthalten.

Es bestand somit die Aufgabe eine gegenüber Abbau stabile Formulierung zur Verfügung zu stellen, die günstige anwendungstechnische Eigenschaften aufweist.

Überraschenderweise wurde nun gefunden, daß diese Aufgabe gelöst wird durch bestimmte flüssige Wirkstoff-Formulierungen, die Polycarbonsäurederivate sowie als Wirkstoffe ALS-Inhibitoren wie beispielsweise Sulfonylharnstoffe und/oder deren Salze enthalten.

Gegenstand der vorliegenden Erfindung ist daher eine flüssige Formulierung (Zubereitung), enthaltend
a) eine oder mehrere Verbindungen aus der Gruppe der Geminitenside und/oder der Sulfosuccinate, und
b) einen oder mehrere Wirkstoffe aus der Gruppe der ALS-Inhibitoren in gelöster form, insbesondere einen oder mehrere Sulfonylharnstoffe und/oder deren Salze, z.B. Salze mit organischen Kationen auf Stickstoff-, Schwefel- oder Phosphor-Basis und/oder anorganischen Kationen wie Metallkationen.

Die flüssigen Formulierungen der vorliegenden Erfindung sind vorzugsweise herbizide Formulierungen, beispielsweise in Form von Emulsionskonzentraten. Die Formulierungen enthalten zumindest einen der Wirkstoffe aus der Gruppe der ALS-Inhibitoren in gelöster Form. Weiterhin bevorzugt sind Formulierungen, die nur ein Derivat aus der Gruppe der Geminitenside und/oder der Sulfosuccinate enthalten.

Die flüssigen Formulierungen der vorliegenden Erfindung können gegebenenfalls neben den Komponenten a) und b) noch einen oder mehrere Hilfs- und Zusatzstoffe als weitere Komponenten enthalten, z.B.:
(c) zusätzliche Tenside und/oder Polymere,
(d) organische Lösungsmittel,
(e) von ALS-Inhibitoren verschiedene Agrochemikalien wie Herbizide, Insektizide, Fungizide, Safener, Wachstumsregulatoren oder Düngemittel,
(f) übliche Formulierungs-Hilfsmittel wie Entschäumer, Verdunstungshemmer, Riechstoffe, Farbstoffe, Frostschutz- oder Konservierungsmittel,
(g) Tankmischkomponenten, und/oder
(h) zusätzliches Wasser.

Bevorzugte Komponenten a) sind Verbindungen aus der Gruppe der Geminitenside, d.h. Amphiphile mit zwei gleichen Kopfgruppen und/oder Verbindungen aus der Gruppe der Sulfosuccinate.

Bevorzugte Verbindungen aus der Gruppe der Sulfosuccinate entsprechen der allgemeinen Formel (I): 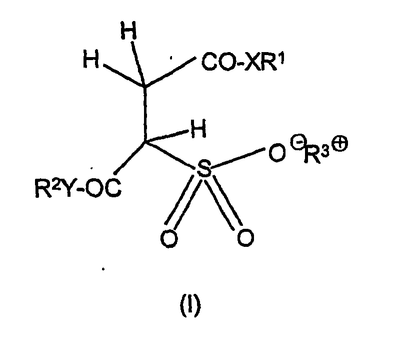 worin
- R¹,R²: unabhängig voneinander gleich oder verschieden H, ein unsubstituierter oder substituierter C₁-C₃₀-Kohlenwasserstoffrest wie C₁-C₃₀-Alkyl, oder ein (Poly) Alkylenoxidaddukt bedeuten,
- R³: ein Kation ist, z.B. ein Metallkation wie ein Alkali- oder Erdalkalimetallkation, ein Ammoniumkation wie NH₄, Alkyl-, Alkylaryl-oder Poly(arylalkyl)phenyl-ammoniumkation oder deren (Poly) Alkylenoxidaddukte, oder ein aminoterminiertes (Poly) Alkylenoxidaddukt, und
- X,Y: unabhängig voneinander gleich oder verschieden O oder NR⁴ bedeuten, worin R⁴ H, ein unsubstituierter oder substituierter C₁-C₃₀-Kohlenwasserstoffrest wie C₁-C₃₀-Alkyl, C₁-C₃₀-Alkyl-C₆-C₁₄-Aryl oder Poly(C₆-C₁₄-Aryl-C₁-C₃₀-Alkyl)phenyl, Dicarboxyethyl oder ein (Poly) Alkylenoxidaddukt ist.

Bevorzugte Verbindungen aus der Gruppe der Geminitenside haben die allgemeine Formel (II) R⁵-CO-NA-R⁶-NB-CO-R⁷ oder (III) R⁵-O-CO-CH(SO₃M)-R⁶-CH(SO₃M)-CO-O-R⁷, worin
- R⁵,R⁷: unabhängig voneinander gleich oder verschieden ein geradkettiger verzweigter oder cyclischer, gesättigter oder ungesättigter Kohlenwasserstoffrest mit 1 bis 30 Kohlenstoffatomen, vorzugsweise 3 bis 17 Kohlenstoffatomen bedeuten, insbesondere Ethylpentyl, Trimethylpentyl, Oleyl oder Propyl,
- R⁶: ein "Spacer" aus einer unverzweigten oder verzweigten Kette mit 2 bis 100 Kohlenstoffatomen bedeutet, die 0 bis 20 Sauerstoffatome, 0 bis 4 Schwefelatome und/oder 0 bis 3 Phosphoratome enthält und die 0 bis 20 funktionelle Seitengruppen, wie Hydroxyl-, Carbonyl-, Carboxyl-, Amino- und/oder Acylaminogruppen aufweist und die 0 bis 100, vorzugsweise 0 bis 20 Alkoxygruppen enthält, und
- A,B: unabhängig voneinander gleich oder verschieden ein Polyalkylenoxidrest mit terminaler OH-, C₁-C₂₀-Alkyl-, Carboxyethyl-, Carboxymethyl-, Sulfonsäure-, Schwefelsäure-, Phosphorsäure- oder Betain-Gruppierung bedeuten, und
- M: ein Kation ist, z.B. ein Metallkation wie ein Alkati- oder Erdalkalimetallkation, ein Ammoniumkation wie NH₄, Alkyl-, Alkylaryl-oder Poly(arylalkyl)phenyl-ammoniumkation oder deren (Poly) Alkylenoxidaddukte, oder ein aminoterminiertes (Poly) Alkylenoxidaddukt.

(Poly)alkylenoxidaddukte im Sinne dieser Beschreibung sind Umsetzungsprodukte von alkoxylierbaren Ausgangsmaterialien wie Alkoholen, Aminen, Carbonsäuren wie Fettsäuren, hydroxy- oder aminofunktionellen Carbonsäureestern (beispielsweise Triglyceriden auf Ricinusölbasis) oder Carbonsäureamiden mit Alkylenoxiden, wobei die (Poly)alkylenoxidaddukte mindestens eine Alkylenoxid-Einheit aufweisen, im allgemeinen aber polymer sind, d.h. 2-200, vorzugsweise 5-150 Alkylenoxid-Einheiten aufweisen. Bei den Alkylenoxid-Einheiten sind Ethylenoxid-, Propylenoxidund Butylenoxid-Einheiten, insbesondere Ethylenoxid-Einheiten bevorzugt. Die beschriebenen (Poly)alkylenoxidaddukte können aus gleichen oder aus verschiedenen Alkylenoxiden, beispielsweise aus blockartig oder statistisch angeordnetem Ethylenoxid und Propylenoxid aufgebaut sein, so daß die vorliegende Anmeldung auch derartige "Misch"alkylenoxidaddukte umfaßt.

Erfindungsgemäß enthaltene Derivate von Polycarbonsäuren entstammen besonders bevorzugt der Gruppe der Sulfosuccinate, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol +2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid+2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher, und im Rahmen der vorliegenden Erfindung bevorzugter Sulfosuccinate der Gruppen a1) bis a5) sind nachfolgend aufgeführt:
a1) Natrium-Dialkylsulfosuccinate, z.B. Na-Diisooctylsulfosuccinat, kommerziell beispielsweise in Form der Aerosol®-Marken (Cytec), der Agrilan®- oder Lankropol®-Marken (Akzo Nobel), der Empimin®-Marken (Albright&Wilson), der Cropol®-Marken (Croda), der Lutensit®-Marken (BASF) oder der Imbirol®-, Madeol®- oder Polirol®-Marken (Cesalpinia) erhältlich, oder Natrium-Di(2-ethylhexyl)sulfosuccinate kommerziell beispielsweise in der Form der Triton® Marken (Union Carbide) wie Triton® GR-5M und Triton® GR-7ME erhältlich.
a2) Dinatrium-Alkoholpolyethylenglykolethersemisulfosuccinat, kommerziell beispielsweise in Form der Aerosol®-Marken (Cytec), der Marlinat®- oder Sermul®-Marken (Condea), der Empicol®-Marken (Albright&Wilson), der Secosol®-Marken (Stepan), der Geropon®-Marken (Rhodia), der Disponil®oder Texapon®-Marken (Cognis) oder der Rolpon®-Marken (Cesalpinia) erhältlich,
a3) Dinatrium-N-Alkylsulfosuccinamat, kommerziell beispielsweise in Form der Aerosol®-Marken (Cytec), der Rewopol®- oder Rewoderm®-Marken (Rewo), der Empimin®-Marken (Albright&Wilson), der Geropon®-Marken (Rhodia) oder der Polirol®-Marken (Cesalpinia) erhältlich,
a4) Dinatrium-Fettsäureamidpolyethylenglykolethersemisulfosuccinat, kommerziell beispielsweise in Form der Elfanol®- oder Lankropol®-Marken (Akzo Nobel), der Rewoderm®-, Rewocid®- oder Rewopol®-Marken (Rewo), der Emcol®-Marken (Witco), der Standapol®-Marken (Cognis) oder der Rolpon®-Marken (Cesalpinia) erhältlich, und
a5) Tetranatrium-N-(1,2-dicarboxyethyl)-N-Octadecyl-sulfosuccinamat, kommerziell beispielsweise in Form von Aerosol 22®- (Cytec) erhältlich.

Bei den in den erfindungsgemäßen Formulierungen enthaltenen Wirkstoffen aus der Gruppe der ALS-Inhibitoren handelt es sich insbesondere um Sulfonamide, vorzugsweise aus der Gruppe der Sulfonylharnstoffe, besonders bevorzugt solche mit der allgemeinen Formel (IV) und/oder deren Salze:

R^{a}-SO₂-NR^{b}-CO-(NR^{c})ₓ - R^{d} (IV)

worin
R^{a} ein Kohlenwasserstoffrest, vorzugsweise ein Arylrest wie Phenyl, der unsubstituiert oder substituiert ist, oder ein heterocyclischer Rest, vorzugsweise ein Heteroarylrest wie Pyridyl, der unsubstituiert oder substituiert ist, und wobei die Reste inklusive Substituenten 1-30 C-Atome, vorzugsweise 1-20 C-Atome aufweisen, oder R^{a} eine elektronenziehende Gruppe wie ein Sulfonamidrest ist,
R^{b} ein Wasserstoffatom oder ein Kohlenwasserstoffrest ist, der unsubstituiert oder substituiert ist und inklusive Substituenten 1-10 C-Atome aufweist, z.B. unsubstitiertes oder substituiertes C₁-C₆-Alkyl, vorzugsweise ein Wasserstoffatom oder Methyl,
R^{c} ein Wasserstoffatom oder ein Kohlenwasserstoffrest ist, der unsubstituiert oder substituiert ist und inklusive Substituenten 1-10 C-Atome aufweist, z.B. unsubstitiertes oder substituiertes C₁-C₆-Alkyl, vorzugsweise ein Wasserstoffatom oder Methyl,
x gleich Null oder 1 ist, und
R^{d} ein Heterocyclylrest ist.

Ein Kohlenwasserstoffrest im Sinne dieser Beschreibung ist ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl; Aryl bedeutet dabei ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.
Ein heterocyclischer Rest oder Ring (Heterocyclyl) im Sinne dieser Beschreibung kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bioder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste im Sinne dieser Beschreibung, wie substituierte Kohlenwasserstoffreste, z.B. substituiertes Alkyl, Alkenyl, Alkinyl oder Aryl wie Phenyl und Benzyl, oder substituiertes Heterocyclyl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen (Fluor, Chlor, Brom, Jod), Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano.

Unter den in den erfindungsgemäßen flüssigen Formulierungen als Komponente b) enthaltenen Wirkstoffen aus der Gruppe der ALS-Inhibitoren wie Sulfonylharnstoffe sind im Sinne der vorliegenden Erfindung neben den neutralen Verbindungen stets auch deren Salze mit anorganischen und/oder organischen Gegenionen zu verstehen.

Als Salze mit anorganischen Gegenionen eignen sich z.B. Salze mit NH₄^{⊕}, SH₃^{⊕} oder PH₄^{⊕}-Gegenionen oder Metallsalze z.B. mit Alkali- oder Erdalkalimetall-Gegenionen. Als Salze mit organischen Gegenionen eignen sich z.B. organische Ammonium-, Sulfonium- und Phosphoniumsalze. Bevorzugt sind organische Gegenionen der Formel [NR⁸R⁹R¹⁰R¹¹]⁺, [SR¹²R¹³R¹⁴]⁺ oder [PR¹⁵R¹⁶R¹⁷R¹⁸]⁺, oder ein quarterniertes Pyridiniumion [Py-R¹⁹]⁺, wobei
R⁸ bis R¹⁹ unabhängig voneinander gleich oder verschieden H oder ein unsubstituierter oder substituierter Kohlenwasserstoffrest wie substituiertes oder unsubstituiertes (C₁-C₃₀)-Alkyl, substituiertes oder unsubstituiertes (C₁-C₁₀)-Alkyl-Aryl, substituiertes oder unsubstituiertes (C₃-C₃₀)-(Oligo)-Alkenyl, substituiertes oder unsubstituiertes (C₃-C₁₀)-(Oligo)-Alkenyl-Aryl, substituiertes oder unsubstituiertes (C₃-C₃₀)-(Oligo)-Alkinyl, substituiertes oder unsubstituiertes (C₃-C₁₀)-(Oligo)-Alkinyl, Aryl oder substituiertes oder unsubstituiertes Aryl sind, oder ein unsubstituierter oder substituierter Heterocyclylrest, insbesondere Heteroarylrest sind wie substituiertes oder unsubstituiertes (C₁-C₁₀)-Alkyl-Hetero-Aryl, substituiertes oder unsubstituiertes (C₃-C₁₀)-(Oligo)-Alkenyl-Hetero-Aryl, substituiertes oder unsubstituiertes (C₃-C₁₀)-(Oligo)-Alkinyl-Hetero-Aryl oder substituiertes oder unsubstituiertes Hetero-Aryl, oder zwei Reste R⁸/R⁹, R¹⁰/R¹¹, R¹²/R¹³, R¹⁵/R¹⁶ und R¹⁷/R¹⁸ zusammen einen unsubstituierten oder substituierten Ring bilden können, wobei zumindest einer der Reste R⁸-R¹¹, zumindest einer der Reste R¹²-R¹⁴ und zumindest einer der Reste R¹⁵-R¹⁸ von H verschieden ist.

Bevorzugte ALS-Inhibitoren entstammen aus der Reihe der Sulfonylharnstoffe, z.B. Pyrimidin- oder Triazinylaminocarbonyl-[benzol-, pyridin-, pyrazol-, thiophen- und (alkylsulfonyl)-alkylamino-]-sulfamide. Bevorzugt als Substituenten am Pyrimidinring oder Triazinring sind Alkoxy, Alkyl, Haloalkoxy, Haloalkyl, Halogen oder Dimethylamino, wobei alle Substituenten unabhängig voneinander kombinierbar sind. Bevorzugte Substituenten im Benzol-, Pyridin-, Pyrazol-, Thiophen- oder (Alkylsulfonyl)-alkylamino-Teil sind Alkyl, Alkoxy, Halogen, Amino, Alkylamino, Dialkylamino, Nitro, Alkoxycarbonyl, Aminocarbonyl, Alkylaminocarbonyl, Dialkylaminocarbonyl, Alkoxyaminocarbonyl, Halogenalkoxy, Halogenalkyl, Alkylcarbonyl, Alkoxyalkyl, (Alkansulfonyl)alkylamino. Solche geeigneten Sulfonylharnstoffe sind beispielsweise
b1) Phenyl- und Benzylsulfonylharnstoffe und verwandte Verbindungen, z.B. 1-(2-Chlorphenylsulfonyl)-3-(4-methoxy-6-methyl-1,3,5-triazin-2-yl)harnstoff (Chlorsulfuron),
   1-(2-Ethoxycarbonylphenylsulfonyl)-3-(4-chlor-6-methoxypyrimidin-2-yl)harnstoff (Chlorimuron-ethyl),
   1-(2-Methoxyphenylsulfonyl)-3-(4-methoxy-6-methyl-1,3,5-triazin-2-yl)harnstoff (Metsulfuron-methyl),
   1-(2-Chlorethoxyphenylsulfonyl)-3-(4-methoxy-6-methyl-1,3,5-triazin-2-yl)harn-stoff (Triasulfuron),
   1-(2-Methoxycarbonylphenylsulfonyl)-3-(4,6-dimethylpyrimidin-2-yl)harnstoff (Sulfumeturon-methyl),
   1-(2-Methoxycarbonylphenylsulfonyl)-3-(4-methoxy-6-methyl-1,3,5-triazin-2-yl)-3-methylharnstoff (Tribenuron-methyl),
   1-(2-Methoxycarbonylbenzylsulfonyl)-3-(4,6-dimethoxypyrimidin-2-yl)harnstoff (Bensulfuron-methyl),
   1-(2-Methoxycarbonylphenylsulfonyl)-3-(4,6-bis-(difluormethoxy)pyrimidin-2-yl)-harnstoff, (Primisulfuron-methyl),
   3-(4-Ethyl-6-methoxy-1,3,5-triazin-2-yl)-1-(2,3-dihydro-1,1-dioxo-2-methylbenzo-[b]thiophen-7-sulfonyl)harnstoff (EP-A 0 796 83),
   3-(4-Ethoxy-6-ethyl-1,3,5-triazin-2-yl)-1-(2,3-dihydro-1,1-dioxo-2-methylbenzo[b]-thiophen-7-sulfonyl)harnstoff (EP-A 0 079 683),
   3-(4-Methoxy-6-methyl-1,3,5-triazin-2-yl)-1-(2-methoxycarbonyl-5-jod-phenylsulfonyl)-harnstoff (Jodosulfuronmethyl und dessen Natriumsalz, WO 92/13845), DPX-66037, Triflusulfuron-methyl (s. Brighton Crop Prot. Conf. - Weeds - 1995, S. 853),
   CGA-277476, (s. Brighton Crop Prot. Conf. - Weeds - 1995, S. 79), Methyl-2-[3-(4,6-dimethoxypyrimidin-2-yl)ureidosulfonyl]-4-methansulfon-amidomethyl-benzoat (Mesosulfuron-methyl und dessen Natriumsalz, WO 95/10507), N,N-Dimethyl-2-[3-(4,6-dimethoxypyrimidin-2-yl)ureidosulfonyl]-4-formylaminobenzamid (Foramsulfuron und dessen Natriumsalz, WO 95/01344);
b2) Thienylsulfonylharnstoffe, z.B.
   1-(2-Methoxycarbonylthiophen-3-yl)-3-(4-methoxy-6-methyl-1,3,5-triazin-2-yl)harnstoff (Thifensulfuron-methyl);
b3) Pyrazolylsulfonylharnstoffe, z.B.
   1-(4-Ethoxycarbonyl-1-methylpyrazol-5-yl-sulfonyl)-3-(4,6-dimethoxypyrimidin-2-yl)harnstoff (Pyrazosulfuron-methyl);
   Methyl-3-chlor-5-(4,6-dimethoxypyrimidin-2-ylcarbamoylsulfamoyl)-1-methyl-pyrazol-4-carboxylat (EP-A 0 282 613);
   5-(4,6-Dimethylpyrimidin-2-yl-carbamoylsulfamoyl)-1-(2-pyridyl)-pyrazol-4-carbonsäuremethylester (NC-330, s. Brighton Crop Prot. Conference 'Weeds' 1991, Vol. 1, S. 45 ff.),
   DPX-A8947, Azimsulfuron, (s. Brighton Crop Prot. Conf. 'Weeds' 1995, S. 65);
b4) Sulfondiamid-Derivate, z.B.
   3-(4,6-Dimethoxypyrimidin-2-yl)-1-(N-methyl-N-methylsulfonylaminosulfonyl)-harnstoff (Amidosulfuron) und dessen Strukturanaloge (EP-A 0 131 258 und Z. Pfl. Krankh. Pfl. Schutz, Sonderheft XII, 489-497 (1990));
b5) Pyridylsulfonylharnstoffe, z.B.
   1-(3-N,N-Dimethylaminocarbonylpyridin-2-ylsulfonyl)-3-(4,6-dimethoxypyrimidin-2-yl)harnstoff (Nicosulfuron),
   1-(3-Ethylsulfonylpyridin-2-ylsulfonyl)-3-(-(4,6-dimethoxypyrimidin-2-yl)harnstoff (Rimsulfuron),
   2-[3-(4,6-Dimethoxypyrimidin-2-yl)ureidosulfonyl]-6-trifluormethyl-3-pyridincarbonsäuremethylester, Natriumsalz (DPX-KE 459, Flupyrsulfuron, s. Brighton Crop Prot. Conf. Weeds, 1995, S. 49),
   Pyridylsulfonylharnstoffe, wie sie z.B. in DE-A 40 00 503 und DE-A 40 30 577 beschrieben sind, vorzugsweise solche der Formel 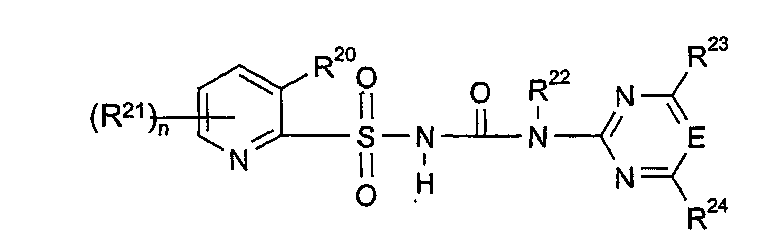 worin
   - E: CH oder N, vorzugsweise CH,
   - R²⁰: Jod oder NR²⁵R²⁶,
   - R²¹: Wasserstoff, Halogen, Cyano, (C₁-C₃)-Alkyl, (C₁-C₃)-Alkoxy, (C₁-C₃)-Halogenalkyl, (C₁-C₃)-Halogenalkoxy, (C₁-C₃)-Alkylthio, (C₁-C₃)-Alkoxy-(C₁-C₃)-alkyl, (C₁-C₃)-Alkoxy-carbonyl, Mono- oder Di-((C₁-C₃)-alkyl)-amino, (C₁-C₃)-Alkylsulfinyl oder -sulfonyl, SO₂-NR^{x}R^{y} oder CO-NR^{x}R^{y}, insbesondere Wasserstoff,
   - R^{x}, R^{y}: unabhängig voneinander Wasserstoff, (C₁-C₃)-Alkyl, (C₁-C₃)-Alkenyl, (C₁-C₃)-Alkinyl oder zusammen -(CH₂)₄-, -(CH₂)₅- oder -(CH₂)₂-O-(CH₂)₂-,
   - n: 0,1,2 oder 3, vorzugsweise 0 oder 1 ist,
   - R²²: Wasserstoff oder CH₃,
   - R²³: Halogen, (C₁-C₂)-Alkyl, (C₁-C₂)-Alkoxy, (C₁-C₂)-Halogenalkyl, insbesondere CF₃, (C₁-C₂)-Halogenalkoxy, vorzugsweise OCHF₂ oder OCH₂CF₃,
   - R²⁴: (C₁-C₂)-Alkyl, (C₁-C₂)-Halogenalkoxy, vorzugsweise OCHF₂, oder (C₁-C₂)-Alkoxy,
   - R²⁵: (C₁-C₄)-Alkyl,
   - R²⁶: (C₁-C₄)-Alkylsulfonyl oder
   - R²⁵ und R²⁶: gemeinsam eine Kette der Formel -(CH₂)₃SO₂- oder -(CH₂)₄SO₂-
   bedeuten, z.B. 3-(4,6-Dimethoxypyrimiden-2-yl)-1-(3-N-methylsulfonyl-N-methylaminopyridin-2-yl)-sulfonylharnstoff, oder deren Salze;
b6) Alkoxyphenoxysulfonylharnstoffe, wie sie z.B. in EP-A 0 342 569 beschrieben sind, vorzugsweise solche der Formel 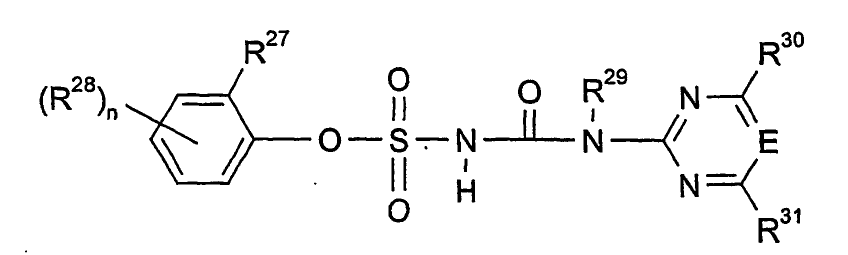 worin
   - E: CH oder N, vorzugsweise CH,
   - R²⁷: Ethoxy, Propoxy oder Isopropoxy,
   - R²⁸: Halogen, NO₂, CF₃, CN, (C₁-C₄)-Alkyl, (C₁-C₄)-Alkoxy, (C₁-C₄)-Alkylthio oder (C₁-C₃)-Alkoxy)-carbonyl, vorzugsweise in 6-Position am Phenylring,
   - n: 0, 1, 2 oder 3, vorzugsweise 0 oder 1,
   - R²⁹: Wasserstoff, (C₁-C₄)-Alkyl oder (C₃-C₄)-Alkenyl,
   - R³⁰, R³¹: unabhängig voneinander Halogen, (C₁-C₂)-Alkyl, (C₁-C₂)-Alkoxy, (C₁-C₂)-Halogenalkyl, (C₁-C₂)-Halogenalkoxy oder (C₁-C₂)-Alkoxy-(C₁-C₂)-alkyl, vorzugsweise OCH₃ oder CH₃, bedeuten, z.B. 3-(4,6-Dimethoxypyrimidin-2-yl)-1-(2-ethoxyphenoxy)-sulfonylhamstoff, oder deren Salze;
b7) Imidazolylsulfonylharnstoffe, z.B.
   MON 37500, Sulfosulfuron (s. Brighton Crop Prot. Conf. 'Weeds', 1995, S: 57), und andere verwandte Sulfonylharnstoff-Derivate und Mischungen daraus;

Typische Vertreter dieser Wirkstoffe sind unter anderem die nachfolgend aufgeführten Verbindungen: Amidosulfuron, Azimsulfuron, Bensulfuron-methyl, Chlorimuron-Ethyl, Chlorsulfuron, Cinosulfuron, Cyclosulfamuron, Ethametsulfuronmethyl, Ethoxysulfuron, Flazasulfuron, Flupyrsulfuron-Methyl-Natrium, Halosulfuron-Methyl, Imazosulfuron, Metsulfuron-Methyl, Nicosulfuron, Oxasulfuron, Primisulfuron-Methyl, Prosulfuron, Pyrazosulfuron-Ethyl, Rimsulfuron, Sulfometuron-Methyl, Sulfosulfuron, Thifensulfuron-Methyl, Triasulfuron, Tribenuron-Methyl, Triflusulfuron-Methyl, Jodosulfuron-Methyl und dessen Natriumsalz (WO 92/13845), Mesosulfuron-Methyl und dessen Natriumsalz (Agrow Nr. 347, 3. März 2000, Seite 22 (PJB Publications Ltd. 2000)) und Foramsulfuron und dessen Natriumsalz (Agrow Nr. 338, 15. Oktober 1999, Seite 26 (PJB Publications Ltd. 2000)).

Die vorstehend aufgeführten Wirkstoffe sind z.B. bekannt aus The Pesticide Manual, 12. Auflage (1999), The British Crop Protection Council oder den nach den einzelnen Wirkstoffen aufgeführten Literaturstellen.

Die flüssigen Formulierungen der vorliegenden Erfindung können gegebenenfalls neben den Komponenten a) und b) noch einen oder mehrere Hilfs- und Zusatzstoffe als weitere Komponenten enthalten, z.B.:
(c) zusätzliche Tenside und/oder Polymere,
(d) organische Lösungsmittel,
(e) von ALS-Inhibitoren verschiedene Agrochemikalien wie Herbizide, Insektizide, Fungizide, Safener, Wachstumsregulatoren oder Düngemittel,
(f) übliche Formulierungs-Hilfsmittel wie Entschäumer, Verdunstungshemmer, Riechstoffe, Farbstoffe, Frostschutz- oder Konservierungsmittel,
(g) Tankmischkomponenten, und/oder
(h) zusätzliches Wasser.

So können in den flüssigen Formulierungen der vorliegenden Erfindung als Komponente c) beispielsweise eines oder mehrere ionogene oder nichtionogene Tenside und/oder Polymere oder/und eine oder mehrere Komponenten auf Silikon-Basis wie beispielsweise Trisiloxantenside, Derivate von Polydimethylsiloxanen und/oder Silikonöle enthalten sein. Beispiele für bevorzugte Komponenten c) sind (Poly) Alkylenoxidaddukte, insbesondere von Fettalkoholen und/oder Fettsäuren und/oder in der kontinuierlichen Phase unlösliche Komponenten. Beispiele für (Poly) Alkylenoxidaddukte sind Soprophor CY8® (Rhodia), Genapol X-060®, Genapol X-080® oder Genagen MEE® (Methylesterethoxylate) (Clariant) und andere endgruppenverschlossene Tenside mit einer Methyl-, Ethyl-, n-Propyl-, i-Propyl-, n-Butyl, tert-Butyl, i-Butyl, sec-Butyl oder Acetyl-Gruppe als Endgruppierung. Als in der kontinuierlichen Phase unlösliche Komponenten können beispielsweise anionogene Tenside wie Hostapur OSB® (Clariant), Netzer IS® (Clariant), Galoryl DT 201® (CFPI), Tamol® (BASF) oder Morwet D 425® (Witco) eingesetzt werden. Durch Einarbeitung von in der kontinuierlichen Phase unlöslichen Komponenten oder auch unlöslicher Wirkstoffe in die Formulierungen ergeben sich Dispersionen. Daher umfaßt die vorliegende Erfindung auch Dispersionen.

Außerdem können die erfindungsgemäßen flüssigen Formulierungen als Komponente d) auch Lösungsmittel z.B. organische Lösungsmittel wie unpolare Lösungsmittel, polare protische oder aprotisch dipolare Lösungsmittel und deren Mischungen enthalten. Beispiele für Lösungsmittel sind
- aliphatische oder aromatische Kohlenwasserstoffe, z.B. Mineralöle, Paraffine oder Toluol, Xylole und Naphthalinderivate, insbesondere 1-Methylnaphthalin, 2-Methylnaphthalin, C₆-C₁₆-Aromatengemische wie die Solvesso®-Reihe (ESSO) z.B. mit den Typen Solvesso® 100 (Kp. 162-177 °C), Solvesso® 150 (Kp. 187-207 °C) und Solvesso® 200 (Kp. 219-282 °C) und C₆-C₂₀-Aliphaten, die linear oder cyclisch sein können, wie die Produkte der Shellsol®-Reihe, Typen T und K oder BP-n Paraffine,
- halogenierte aliphatische oder aromatische Kohlenwasserstoffe wie Methylenchlorid bzw. Chlorbenzol,
- Ester wie Triacetin (Essigsäuretriglycerid), Butyrolacton, Propylencarbonat, Triethylcitrat und Phthalsäure-(C₁-C₂₂)alkylester, speziell Phthalsäure-(C₁-C₈)alkylester, Maleinsäure-(C₁-C₁₃)alkylester,
- Alkohole wie Methanol, Ethanol, n- und i-Propanol, n-, i-, t-, 2-Butanol, Tetrahydrofurfurylalkohol,
- Ether wie Diethylether, Tetrahydrofuran (THF), Dioxan, Alkylenglykolmonoalkyether und -dialkylether wie z.B. Propylenglykolmonomethylether, speziell Dowanol® PM (Propylenglykolmonomethylether), Propylen-glykolmonoethylether, Ethylenglykolmonomethylether oder - monoethylether, Diglyme und Tetraglyme,
- Amide wie Dimethylformamid (DMF), Dimethylacetamid, Dimethylcapryl/caprin-fettsäureamid und N-Alkylpyrrolidone,
- Ketone wie das wasserlösliche Aceton, aber auch mit Wasser nicht mischbare Ketone wie beispielsweise Cyclohexanon oder Isophoron,
- Nitrile wie Acetonitril, Propionitril, Butyronitril und Benzonitril,
- Sulfoxide und Sulfone wie Dimethylsulfoxid (DMSO) und Sulfolan, sowie
- Öle im allgemeinen, wie Mineralöle oder Öle auf pflanzlicher Basis wie Maiskeimöl, Leinsaatöl und Rapsöl.

Bevorzugte organische Lösungsmittel im Sinne der vorliegenden Erfindung sind Esteröle wie Rapsölmethylester, Tetrahydrofurfurylalkohol oder Triacetin.

Die erfindungsgemäßen Flüssigformulierungen, können als Komponente e) neben den als Komponente b) enthaltenen ALS-Inhibitoren noch weitere von ALS-Inhibitoren verschiedene Agrochemikalien enthalten. Dies gilt beispielsweise für Kombinationen mit von ALS-Inhibitoren verschiedenen Herbiziden, z.B. aus der Gruppe der Phenoxyphenoxypropionate wie Diclofop-methyl, der Gruppe der Heteroaryloxyphenoxypropionate wie Fenoxaprop-Ethyl oder Clodinafop-propargyl oder aus der Gruppe der Alkylazine, oder auch für die Kombination mit Safener-Wirkstoffen.

Von ALS-Inhibitoren verschiedene Herbizide sind z.B. Herbizide aus der Gruppe der Carbamate, Thiocarbamate, Halogenacetanilide, substituierte Phenoxy-, Naphthoxyund Phenoxyphenoxycarbonsäure-Derivate sowie Heteroaryloxyphenoxyalkancarbonsäure-Derivate, wie Chinolyloxy-, Chinoxalyl-oxy-, Pyridyloxy-, Benzoxazolyloxy- und Benzthiazolyloxyphenoxyalkan-carbonsäureester, Cyclohexandionabkömmlinge, Imidazolinone, Pyrimidinyloxy-pyridincarbonsäure-Derivate, Pyrimidyloxy-benzoesäure-Derivate, Triazolo-pyrimidin-sulfonamid-Derivate sowie S-(N-Aryl-N-alkylcarbamoylmethyl)-dithiophosphorsäureester. Bevorzugt sind dabei Phenoxyphenoxy- und Heteroaryloxyphenoxycarbonsäureester und -salze, Imidazolinone sowie Herbizide, die gemeinsam mit ALS-Hemmstoffen (Acetolactat-Synthetase-Hemmstoffe) zur Erweiterung des Wirkungsspektrums eingesetzt werden, z.B. Bentazon, Cyanazin, Atrazin, Dicamba oder Hydroxybenzonitrile wie Bromoxynil und loxynil und andere Blattherbizide.

Geeignete Herbizide, die in den erfindungsgemäßen Formulierungen als Komponente e) enthalten sein können, sind beispielsweise:
A) Herbizide vom Typ der Phenoxyphenoxy- und
   Heteroaryloxyphenoxycarbonsäure-Derivate, wie
   A1) Phenoxyphenoxy- und Benzyloxyphenoxy-carbonsäure-Derivate, z.B. 2-(4-(2,4-Dichlorphenoxy)-phenoxy)-propionsäuremethylester (Diclofop-methyl), 2-(4-(4-Brom-2-chlorphenoxy)phenoxy)propionsäuremethylester (DE-A 26 01 548), 2-(4-(4-Brom-2-fluorphenoxy)phenoxy)propionsäuremethylester (US-A 4,808,750), 2-(4-(2-Chlor-4-trifluormethylphenoxy)phenoxy)propionsäuremethylester (DE-A 24 33 067),
      2-(4-(2-Fluor-4-trifluormethylphenoxy)phenoxy)propionsäuremethylester (US-A 4,808,750),
      2-(4-(2,4-Dichlorbenzyl)phenoxy)propionsäuremethylester (DE-A 24 17 487), 4-(4-(4-Trifluormethylphenoxy)phenoxy)pent-2-en-säureethylester, 2-(4-(4-Trifluormethylphenoxy)phenoxy)propionsäuremethylester (DE-A 24 33 067);
   A2) "Einkernige" Heteroaryloxyphenoxy-alkancarbonsäure-Derivate, z.B. 2-(4-(3,5-Dichlorpyridyl-2-oxy)phenoxy)propionsäureethylester (EP-A 0 002 925), 2-(4-(3,5-Dichlorpyridyl-2-oxy)phenoxy)propionsäurepropargylester (EP-A 0 003 114),
      2-(4-(3-Chlor-5-trifluormethyl-2-pyridyloxy)phenoxy)propionsäure-methylester
      (EP-A 0 003 890),
      2-(4-(3-Chlor-5-trifluormethyl-2-pyridyloxy)phenoxy)propionsäureethylester
      (EP-A 0 003 890),
      2-(4-(5-Chlor-3-fluor-2-pyridyloxy)phenoxy)propionsäurepropargylester
      (EP-A 0 191 736),
      2-(4-(5-Trifluormethyl-2-pyridyloxy)phenoxy)propionsäurebutylester
      (Fluazifop-butyl);
   A3) "Zweikemige" Heteroaryloxyphenoxy-alkancarbonsäure-Derivate, z.B. 2-(4-(6-Chlor-2-chinoxalyloxy)phenoxy)propionsäuremethylester und -ethylester (Quizalofopmethyl und Quizalofopethyl),
      2-(4-(6-Fluor-2-chinoxalyloxy)phenoxy)propionsäuremethylester (s. J. Pest. Sci. Vol. 10, 61 (1985)),
      2-(4-(6-Chlor-2-chinoxalyloxy)phenoxy)propionsäure-2-Isopropylidenaminooxyethylester (Propaquizafop),
      2-(4-(6-Chlorbenzoxazol-2-yl-oxy)phenoxy)propionsäureethylester (Fenoxaprop-ethyl), dessen D(+) Isomer (Fenoxaprop-P-ethyl) und 2-(4-(6-Chlorbenzthiazol-2-yloxy)phenoxy)propionsäureethylester (DE-A 26 40 730), 2-(4-(6-Chlorchinoxalyloxy)phenoxy)propionsäure-tetrahydro-2-furylmethylester (EP-A 0 323 727);
   B) Chloracetanilide, z.B.
      N-Methoxymethyl-2,6-diethyl-chloracetanilid (Alachlor),
      N-(3-Methoxyprop-2-yl)-2-methyl-6-ethyl-chloracetanilid (Metolachlor),
      N-(3-Methyl-1,2,4-oxadiazol-5-yl-methyl)-chloressigsäure-2,6-dimethylanilid,
      N-(2,6-Dimethylphenyl)-N-(1-pyrazolylmethyl)-chloressigsäureamid (Metazachlor);
   C) Thiocarbamate, z.B.
      S-Ethyl-N,N-dipropylthiocarbamat (EPTC),
      S-Ethyl-N,N-diisobutylthiocarbarnat (Butylate);
   D) Cyclohexandionoxime, z.B.
      3-(1-Allyloxyiminobutyl)-4-hydroxy-6,6-dimethyl-2-oxocyclohex-3-encarbonsäuremethylester, (Alloxydim),
      2-(1-Ethoxyiminobutyl)-5-(2-ethylthiopropyl)-3-hydroxy-cyclohex-2-en-1-on (Sethoxydim),
      2-(1-Ethoxyiminobutyl)-5-(2-phenylthiopropyl)-3-hydroxy-cyclohex-2-en-1-on (Cloproxydim),
      2-(1-(3-Chlorallyloxy)iminobutyl)-5-(2-ethylthiopropyl)-3-hydroxy-cyclohex-2-en-1-on,
      2-(1-(3-Chlorallyloxy)iminopropyl)-5-(2-ethylthiopropyl)-3-hydroxy-cyclohex-2-en-1-on (Clethodim),
      2-(1-Ethoxyiminobutyl)-3-hydroxy-5-(thian-3-yl)-cyclohex-2-enon (Cycloxydim),
      2-(1-Ethoxyiminopropyl)-5-(2,4,6-trimethylphenyl)-3-hydroxy-cyclohex-2-en-1-on (Tralkoxydim);
   E) Imidazolinone, z.B.
      2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
      5-Ethyl-2-(4-isopropyl-4-methyl-5-oxo-2-imidazolin-2-yl)-pyridin-3-carbonsäure (Imazethapyr),
      2-(4-Isopropyl-4-methyl-5-oxo-2-imidazolin-2-yl)-chinolin-3-carbonsäure (Imazaquin),
      2-(4-Isopropyl-4-methyl-5-oxo-2-imidazolin-2-yl)-pyridin-3-carbonsäure (Imazapyr),
      5-Methyl-2-(4-isopropyl-4-methyl-5-oxo-2-imidazolin-2-yl)-pyridin-3-carbonsäure (Imazethamethapyr);
   F) Triazolopyrimidinsulfonamid-Derivate, z.B. N-(2,6-Difluorphenyl)-7-methyl-1,2,4-triazolo[1,5-c]pyrimidin-2-sulfonamid (Flumetsulam),
      N-(2,6-Dichlor-3-methylphenyl)-5,7-dimethoxy-1,2,4-triazolo[1,5-c]pyrimidin-2-sulfonamid,
      N-(2,6-Difluorphenyl)-7-fluor-5-methoxy-1,2,4-triazolo[1,5-c]pyrimidin-2-sulfonamid,
      N-(2,6-Dichlor-3-methylphenyl)-7-chlor-5-methoxy-1,2,4-triazolo[1,5-c]pyrimidin-2-sulfonamid,
      N-(2-Chlor-6-methoxycarbonyl)-5,7-dimethyl-1,2,4-triazolo[1,5-c]pyrimidin-2-sulfonamid (EP-A 0 343 752, US-A 4,988,812);
   G) Benzoylcyclohexandione, z.B.
      2-(2-Chlor-4-methylsulfonylbenzoyl)-cyclohexan-1,3-dion (SC-0051, EP-A
      0 137 963), 2-(2-Nitrobenzoyl)-4,4-dimethyl-cyclohexan-1,3-dion (EP-A 0 274 634), 2-(2-Nitro-3-methylsulfonylbenzoyl)-4,4-dimethylcyclohexan-1,3-dion (WO 91/13548);
   H) Pyrimidinyloxy-pyridincarbonsäure- bzw. Pyrimidinyloxybenzoesäure-Derivate, z.B.
      3-(4,6-Dimethoxypyrimidin-2-yl)-oxy-pyridin-2-carbonsäurebenzyl-ester (EP-A 0 249 707),
      3-(4,6-Dimethoxypyrimidin-2-yl)-oxy-pyridin-2-carbonsäuremethylester (EP-A 0 249 707),
      2,6-Bis[(4,6-dimethoxypyrimidin-2-yl)-oxy]-benzoesäure (EP-A 0 321 846),
      2,6-Bis[(4,6-dimethoxypyrimidin-2-yl)-oxy]-benzoesäure-1-(ethoxycarbonyl-oxyethyl)-ester (EP-A 0 472 113);
   I) S-(N-Aryl-N-alkyl-carbamoylmethyl)-dithiophosphonsäureester, wie S-[N-(4-Chlorphenyl)-N-isopropyl-carbamoylmethyl]-O,O-dimethyl-dithiophosphat (Anilophos).
   J) Alkylazine, z.B. wie beschrieben in WO-A 97/08156, WO-A-97/31904, DE-A-19826670, WO-A-98/15536, WO-A-8/15537, WO-A-98/15538, WO-A-98/15539 sowie auch DE-A-19828519, WO-A-98/34925, WO-A-98/42684, WO-A-99/18100, WO-A-99/19309, WO-A-99/37627 und WO-A-99/65882, vorzugsweise solche der Formel (E) 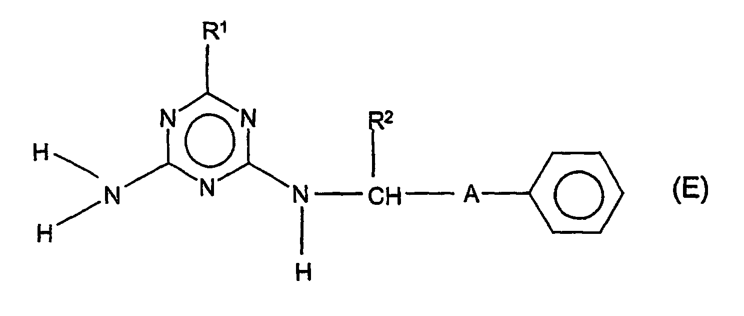
worin
- R¹: (C₁-C₄)-Alkyl oder (C₁-C₄)-Haloalkyl;
- R²: (C₁-C₄)-Alkyl, (C₃-C₆)-Cycloalkyl oder (C₃-C₆)-Cycloalkyl-(C₁-C₄)-Alkyl und
- A: -CH₂-, -CH₂-CH₂-, -CH₂-CH₂-CH₂-, -O-, -CH₂₋CH₂-O-, -CH₂-CH₂-CH₂-O-
bedeuten, besonders bevorzugt solche der Formel E1-E7

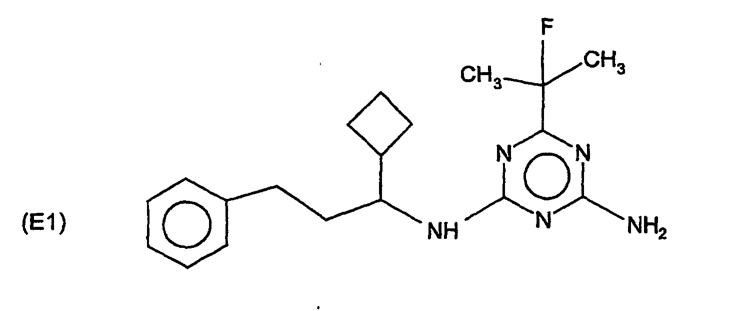

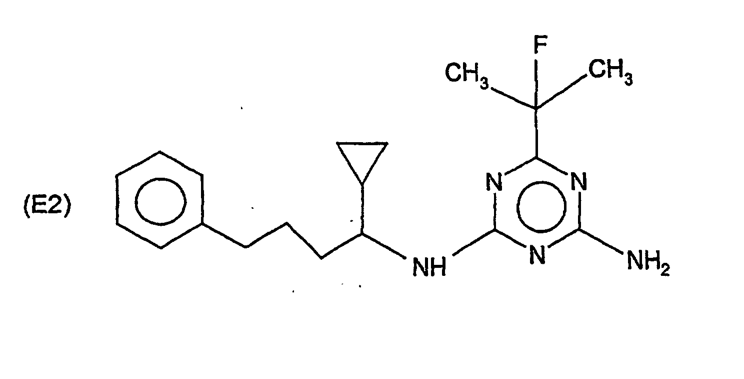

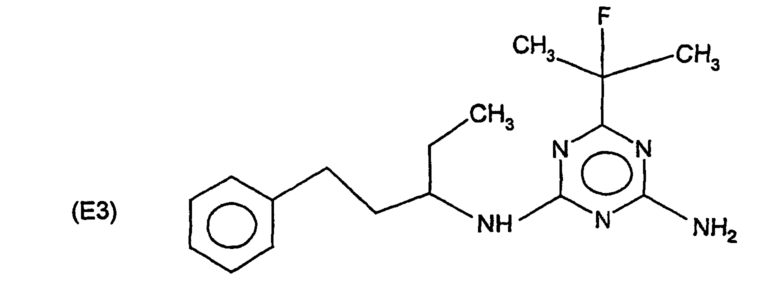

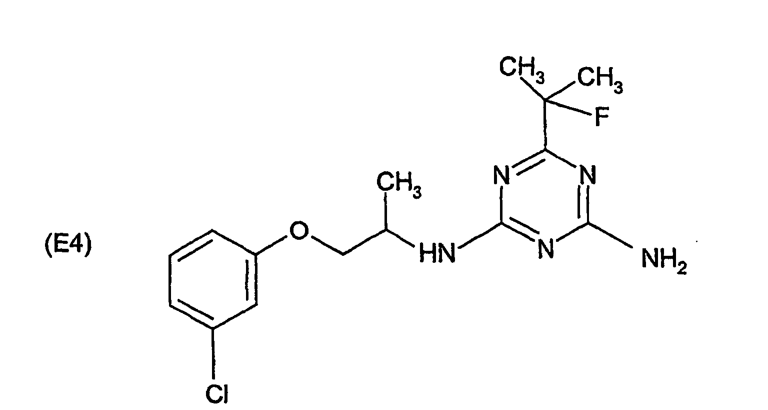

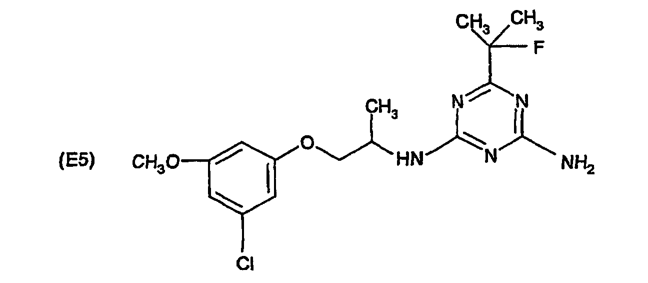

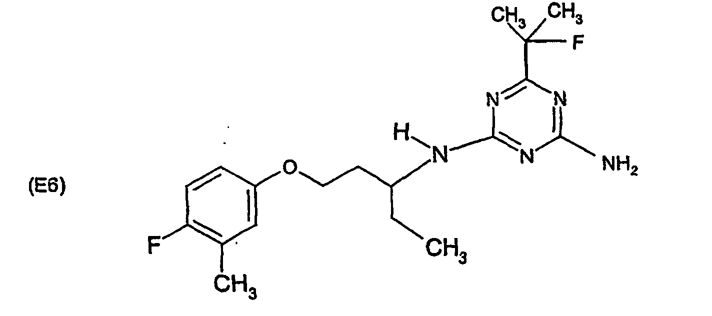

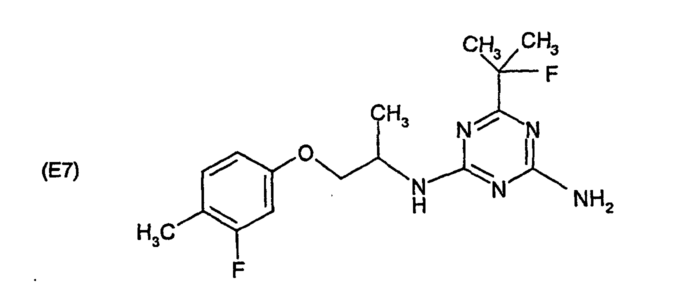

Die Herbizide der Gruppen A bis J sind beispielsweise aus den oben jeweils genannten Schriften und aus "The Pesticide Manual", The British Crop Protection Council and the Royal Soc. of Chemistry, 10th Edition, 1994, "Agricultural Chemicals Book II - Herbicides -", by W.T. Thompson, Thompson Publications, Fresno CA, USA 1990 und "Farm Chemicals Handbook '90", Meister Publishing Company, Willoughby OH, USA,1990, bekannt.

Folgende Gruppen von Verbindungen können bespielsweise als Safener in den erfindungsgemäßen Formulierungen enthalten sein:
a) Verbindungen vom Typ der Dichlorphenylpyrazolin-3-carbonsäure (S1), vorzugsweise Verbindungen wie
   1-(2,4-Dichlorphenyl)-5-(ethoxycarbonyl)-5-methyl-2-pyrazolin-3-carbonsäureethylester (S1-1), und verwandte Verbindungen, wie sie in der WO 91/07874 beschrieben sind,
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.
c) Verbindungen vom Typ der Triazolcarbonsäuren (S1), vorzugsweise Verbindungen wie Fenchlorazol, d.h: 1-(2,4-Dichlorphenyl)-5-trichlormethyl-(1H)-1,2,4-triazol-3-carbonsäureethylester (S1-6), und verwandte Verbindungen (siehe EP-A-174 562 und EP-A-346 620);
d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) oder -n-propylester (S1-10) oder der 5-(4-Fluorphenyl)-5-phenyl-2-isoxazolin-3-carbonsäureethylester (S1-19), wie sie in der deutschen Patentanmeldung (WO-A-95/07897) beschrieben sind.
e) Verbindungen vom Typ der 8-Chinolinoxyessigsäure (S2), vorzugsweise (5-Chlor-8-chinolinoxy)-essigsäure-(1-methyl-hex-1-yl)-ester (S2-1), (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).
h) Wirkstoffe vom Typ der Pyrimidine, die als bodenwirksame Safener in Reis angewendet werden, wie z.B. "Fenclorim" (PM, S. 512-511) (= 4,6-Dichlor-2-phenylpyrimidin), das als Safener für Pretilachlor in gesätem Reis bekannt ist,
i) Wirkstoffe vom Typ der Dichloracetamide, die häufig als Vorauflaufsafener (bodenwirksame Safener) angewendet werden, wie z.B. "Dichlormid" (PM, S. 363-364) (= N,N-Diallyl-2,2-dichloracetamid), AR-29148" (= 3-Dichloracetyl-2,2,5-trimethyl-1,3-oxazolidon von der Firma Stauffer),
   "Benoxacor" (PM, s. 102-103) (= 4-Dichloracetyl-3,4-dihydro-3-methyl-2H-1,4-benzoxazin).
   APPG-1292" (= N-Allyl-N[(1,3-dioxolan-2-yl)-methyl]dichloracetamid von der Firma PPG Industries),
   ADK-24" (= N-Allyl-N-[(allylaminocarbonyl)-methyl]-dichloracetamid von der Firma Sagro-Chem),
   AAD-67" oder AMON 4660" (= 3-Dichloracetyl-1-oxa-3-aza-spiro[4,5]decan von der Firma Nitrokemia bzw. Monsanto),
   "Diclonon" oder ABAS145138" oder ALAB145138" (= (= 3-Dichloracetyl-2,5,5-trimethyl-1,3-diazabiclyco[4.3.0]nonan von der Firma BASF) und
   "Furilazol" oder AMON 13900" (siehe PM, 637-638) (= (RS)-3-Dichloracetyl-5-(2-furyl)-2,2-dimethyloxazolidon)
j) Wirkstoffe vom Typ der Dichloracetonderivate, wie z.B. AMG 191" (CAS-Reg. Nr. 96420-72-3) (= 2-Dichlormethyl-2-methyl-1,3-dioxolan von der Firma Nitrokemia), das als Safener für Mais bekannt ist,
k) Wirkstoffe vom Typ der Oxyimino-Verbindungen, die als Saatbeizmittel bekannt sind, wie z.B.
   "Oxabetrinil" (PM, S. 902-903) (= (Z)-1,3-Dioxolan-2-ylmethoxyimino(phenyl)acetonitril), das als Saatbeiz-Safener gegen Schäden von Metolachlor bekannt ist, "Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener gegen Schäden von Metolachlor bekannt ist, und "Cyometrinil" oder A-CGA-43089" (PM, S. 1304) (= (Z)-Cyanomethoxyimino (phenyl)acetonitril), das als Saatbeiz-Safener gegen Schäden von Metolachlor bekannt ist,
l) Wirkstoffe vom Typ der Thiazolcarbonsäureester, die als Saatbeizmittel bekannt sind, wie z.B.
   "Flurazol" (PM, S. 590-591) (= 2-Chlor-4-trifluormethyl-1,3-thiazol-5-carbonsäurebenzylester), das als Saatbeiz-Safener gegen Schäden von Alachlor und Metolachlor bekannt ist,
m) Wirkstoffe vom Typ der Napthalindicarbonsäurederivate, die als Saatbeizmittel bekannt sind, wie z.B.
   "Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,
n) Wirkstoffe vom Typ Chromanessigsäurederivatre, wie z.B. ACL 304415" (CAS-Reg. Nr. 31541-57-8) (= 2-84-Carboxy-chroman-4-yl)-essigsäure von der Firma American Cyanamid), das als Safener für Mais gegen Schäden von Imidazolinonen bekannt ist,
o) Wirkstoffe, die neben einer herbiziden Wirkung gegen Schadpflanzen auch Safenerwirkung an Kulturpflanzen wie Reis aufweisen, wie z.B.
   "Dimepiperate" oder AMY-93" (PM, S. 404-405) (= Piperidin-1-thiocarbonsäure-S-1-methyl-1-phenylethylester), das als Safener für Reis gegen Schäden des Herbizids Molinate bekannt ist,
   "Daimuron" oder ASK 23" (PM, S. 330) (= 1-(1-Methyl-1-phenylethyl)-3-ptolyl-hamstoff), das als Safener für Reis gegen Schäden des Herbizids Imazosulfuron bekannt ist,
   "Cumyluron" = AJC-940" (= 3-(2-Chlorphenylmethyl)-1-(1-methyl-1-phenylethyl)-hamstoff, siehe JP-A-60087254), das als Safener für Reis gegen Schäden einiger Herbizide bekannt ist,
   "Methoxyphenon" oder ANK 049" (= 3,3'-Dimeihyl-4-methoxybenzophenon),das als Safener für Reis gegen Schäden einiger Herbizide bekannt ist,
   "CSB" (= 1-Brom-4-(chlormethylsulfonyl)-benzol) (CAS-Reg. Nr. 54091-06-4 von Kumiai).

In den erfindungsgemäßen flüssigen Formulierungen können als Komponente f) auch übliche Formulierungshilfsmittel wie Entschäumer, Frostschutzmittel, Verdunstungshemmer, Konservierungsmittel, Riechstoffe oder Farbstoffe enthalten sein. Bevorzugte Formulierungshilfsstoffe sind Frostschutzmittel und Verdunstungshemmer wie Glycerin, z.B. in einer Menge von 2 bis 10 Gew.-% und Konservierungsstoffe, z.B. Mergal K9N® (Riedel) oder Cobate C®.

Es können in den erfindungsgemäßen Formulierungen als Komponente g) auch Tankmisch-Komponenten enthalten sein. Beispiele hierfür sind Tankmisch-Adjuvantien wie Telmion® (Hoechst) oder veresterte Pflanzenöle wie Actirob B® (Novance) oder Hasten® (Victorian Chemicals), anorganische Verbindungen wie Ammoniumsulfat, Ammoniumnitrat und Düngemittel oder Hydrotropika.

Als Komponente h) kann in den erfindungsgemäßen Formulierungen auch zusätzliches Wasser enthalten sein.

Besonders bevorzugt sind erfindungsgemäße flüssige Formulierungen, welche als Komponente a) ein Natrium-Dialkylsulfosuccinat wie Triton® und als Komponente b) einen oder mehrere Sulfonylharnstoffe aus der Gruppe Iodosulfuron-methyl, Mesosulfuron-methyl, Foramsulfuron, Ethoxysulfuron oder Amidosulfuron und/oder deren Salze, z.B. Alkalimetallsalze wie Natriumsalze oder Ammoniumsalze, insbesondere quartäre Ammoniumsalze wie Tetrabutylammoniumsalze enthalten. Diese besonders bevorzugten flüssigen Formulierungen können zusätzlich als Komponente e) einen oder mehrere agrochemische Wirkstoffe aus der Gruppe Fenoxaprop-ethyl, Diflufenican, Mefenpyr-diethyl und Isoxadifen-ethyl enthalten.

Die erfindungsgemäßen flüssigen Formulierungen können z.B. in Form von Lösungen, Emulsionskonzentraten oder Dispersionen wie Emulsionen oder Suspensionen vorliegen. Dabei liegt bevorzugt zumindest ein Wirkstoff aus der Gruppe der ALS-Inhibitoren, vorzugsweise zumindest ein Sulfonylhamstoff in gelöster Form vor. In besonders bevorzugter Ausführungsform liegen alle enthaltenen Wirkstoffe in Lösung vor.

Aus erfindungsgemäßen nahezu wasserfreien Lösungen können durch Zugabe von Wasser Mikroemulsionen, Makroemulsionen oder wasserhaltige Lösungen erhalten werden. Somit umfaßt die vorliegende Erfindung neben nahezu wasserfreien Lösungen (z.B. in organischen Lösungsmitteln oder in den erfindungsgemäß enthaltenen Derivaten-von Polycarbonsäuren) auch wasserhaltige Formulierungen wie O/W- und W/O-Mikroemulsionen oder EW- und EO-Makroemulsionen.
Durch Einarbeitung von in der kontinuierlichen Phase unlöslichen Komponenten oder Wirkstoffen in die Formulierungen ergeben sich Suspensionen. Daher umfaßt die vorliegende Erfindung auch derartige Suspensionen.

Erfindungsgemäße Formulierungen ergeben bei Verdünnung mit Wasser Dispersionen oder auch wasserhaltige Lösungen, die ebenfalls von der vorliegenden Erfindung umfaßt werden.

Der Wirkstoffgehalt der erfindungsgemäßen Formulierungen kann im allgemeinen zwischen 0,001 Gewichtsprozent und 50 Gewichtsprozent betragen, wobei im Einzelfall, insbesondere bei Verwendung mehrerer Wirkstoffe, auch höhere Beladungen möglich sind. Da ALS-Inhibitoren sehr effektive Wirkstoffe darstellen liegen die bevorzugten Aufwandmengen üblicherweise zwischen 1 und 50g a.i./ha, d.h. daß bereits mit diesen äußerst geringen Aufwandmengen massiv in den Aminosäure-metabolismus der Schadpflanzen eingegriffen wird und das Enzym Acetolactatsynthase gehemmt wird, wiederum zu einem Absterben der Schadpflanzen führt. Der Gehalt an Polycarbonsäurederivaten beträgt im allgemeinen 0,1-80%, kann im Einzelfall allerdings auch höher liegen.

Die zur Herstellung der erfindungsgemäßen Formulierungen verwendbaren Hilfsund Zusatzstoffe wie z.B. Tenside und Lösungsmittel sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C.Hauser-Verlag, München, 4.Auflage 1986.

Bevorzugte Verhältnisse der Komponenten a) : b) in den erfindungsgemäßen flüssigen Formulierungen, insbesondere Emulsionskonzentraten sind 1:0.1-1:100, bevorzugt 1:1 bis 1:20, beispielsweise ca. 1:2, 1:3, 1:5, 1:6, 1:7 oder 1:10.
Die erfindungsgemäßen flüssigen Formulierungen lassen sich durch übliche bereits bekannte Verfahren herstellen, d.h. beispielsweise durch Vermischen der verschiedenen Komponenten mit Hilfe von Rührem, Schüttlern oder (statischen) Mischern. Dabei ist gegebenenfalls ein kurzzeitiges Erwärmen von Vorteil. Im Falle salzartiger ALS-Inhibitoren eröffnet dieses einfache Verfahren die Möglichkeit, die entsprechenden ALS-Inhibitor-Salze in-situ herzustellen, indem man beispielsweise nichtionogene Tenside verwendet, bei denen keine nachträgliche Neutralisation des Katalysators - im allgemeinen ein Metallkatalysator - durchgeführt wurde.
Die vorliegende Erfindung umfaßt somit auch die zur Herstellung der erfindungsgemäßen flüssigen Formulierungen beschriebenen Verfahren. Diese zeichnen sich insbesondere durch produktionstechnische Vorteile aus.

In einer bevorzugten Ausführungsform werden ALS-Inhibitoren wie Sulfonylhamstoffe mit Gegenionen verwendet, die Phasentransfereigenschaften aufweisen. Solche Gegenionen sind beispielsweise organische Gegenionen wie organische Ammonium-, Sulfonium- oder Phosphoniumionen. Derartige Gegenionen lassen sich besonders einfach in die Formulierungen einarbeiten, wenn sie als Beimischungen zu zusätzlichen beispielsweise nichtionogenen Formulierungskomponenten enthalten sind. Daher umfaßt die Erfindung auch die Einarbeitung der Gegenionen in die Formulierungen.

Die erfindungsgemäßen flüssigen Formulierungen enthalten vorzugsweise
(a) 0,1 bis 80 Gew.-%, vorzugsweise 10 bis 60 Gew.-% an eine oder mehrere Verbindungen aus der Gruppe der Geminitenside und/oder Sulfosuccinate,
(b) 0,001 bis 50 Gew.-%, vorzugsweise 1 bis 15 Gew.-% herbizider Wirkstoffe aus der Gruppe der ALS-Inhibitoren, vorzugsweise aus der Gruppe der Sulfonylharnstoffe,
(c) 0 bis 60 Gew.-%, vorzugsweise 0,1 bis 50 Gew.-% weiterer Tenside und/oder Polymere,
(d) 0 bis 90 Gew.-%, vorzugsweise 1 bis 30 Gew.-% organischer Lösungsmittel,
(e) 0 bis 50 Gew.-%, vorzugsweise 0 bis 30 Gew.-% von ALS-Inhibitoren verschiedener Agrochemikalien,
(f) 0 bis 20 Gew.-%, vorzugsweise 0 bis 10 Gew.-% üblicher Formulierungshilfsstoffe, und
(h) 0 bis 50 Gew.-%, vorzugsweise 0 bis 10 Gew.-% zusätzliches Wasser.

Besonders bevorzugte erfindungsgemäße Formulierungen sind wasserfreie Emulsionskonzentrate, enthaltend
(a) 10 bis 60 Gew.-% an Derivaten von einer oder mehreren Verbindungen aus der Gruppe der Geminitenside und/oder Sulfosuccinate,
(b) 1 bis 15 Gew.-% an herbiziden Wirkstoffen vom Typ der ALS-Inhibitoren, insbesondere aus der Gruppe der Sulfonylhamstoffe,
(c) 0 bis 50 Gew.-% an weiteren Tensiden und/oder Polymeren,
(d) 0 bis 30 Gew.-% an organischen Lösungsmitteln
(e) 0 bis 50 Gew.-% an von ALS-Inhibitoren verschiedener Agrochemikalien und
(f) 0 bis 10 Gew.-% an üblichen Formulierungshilfsstoffen.

Die erfindungsgemäßen flüssigen Formulierungen können z.B. zur Bekämpfung von unerwünschtem Pflanzenwuchs verwendet werden. Hierzu wird eine wirksame Menge der erfindungsgemäßen Formulierung, falls erforderlich nach Verdünnen mit Wasser, auf die Samen, Pflanzen, Pflanzenteile oder die Anbaufläche appliziert.

Die erfindungsgemäßen Formulierungen stellen physikalisch und chemisch stabile Formulierungen dar, welche bei Verdünnung mit Wasser Spritzbrühen mit physikalisch-anwendungstechnisch günstigen Eigenschaften ergeben. Darüber hinaus weisen die erfindungsgemäßen Formulierungen günstige biologische Eigenschaften auf und sind breit einsetzbar, z.B. zur Bekämpfung von unerwünschtem Pflanzenwuchs.

### Beispiele

Die in Tabelle 1 angegeben Komponenten wurden in den angegebenen Mengen miteinander vermischt und im Fall der Beispiele XII-XIV anschließend vermahlen. Die Ausgangswerte und Endwerte (g Sulfonylhamstoff in der Formulierung) wurden mit HPLC bestimmt. In den Beispielen I - XI und XV wurden Emulsionskonzentrate erhalten, in den Beispielen XII - XIV wurden Dispersionen erhalten. Die Beispiele zeigen, daß sich Derivate von Polycarbonsäuren, insbesondere vom Typ der Sulfosuccinate, stabilisierend auf flüssig formulierte Sulfonylharnstoffe auswirken. Dabei können in den erfindungsgemäßen Formulierungen auch Lösungsmittel (Beispiele IV - VII), kommerzielle Adjuvantien (Beispiele X und XI), nichtionogene Tenside (Beispiel IX) oder dispergierte Tensidkomponenten (Beispiele XII, XIII und XIV) enthalten sein. Außerdem können die erfindungsgemäßen Formulierungen neben stabilen "Ein-Wirkstoff-Formulierungen" auch solche mit zwei, drei oder mehreren Wirkstoffen sein.

In Tabelle 1 beziehen sich Zahlenangaben auf das Gewicht in Gramm.

Abkürzungen zu Tabelle 1

**Tabelle 1:**

| Formulierungsbeispiele für erfindungsgemäße Flüssigformulierungen | |
|---|---|
| NBu₄ | Tetrabutylammonium |
| Na | Natrium |
| NaDOS | Natrium-Di(ethylhexyl)sulfosuccinat |
| THF-alkohol | Tetrahydrofurfurylalkohol |
| Eumulgin CO 3522® | Rübölethoxylat (Cognis GmbH) |
| E1 | 2-Amino-4-(1-fluor-1-methyl-ethyl)-6-(3-phenyl-1-cyclobutyl-1-propylamino)-1,3,5- triazin |

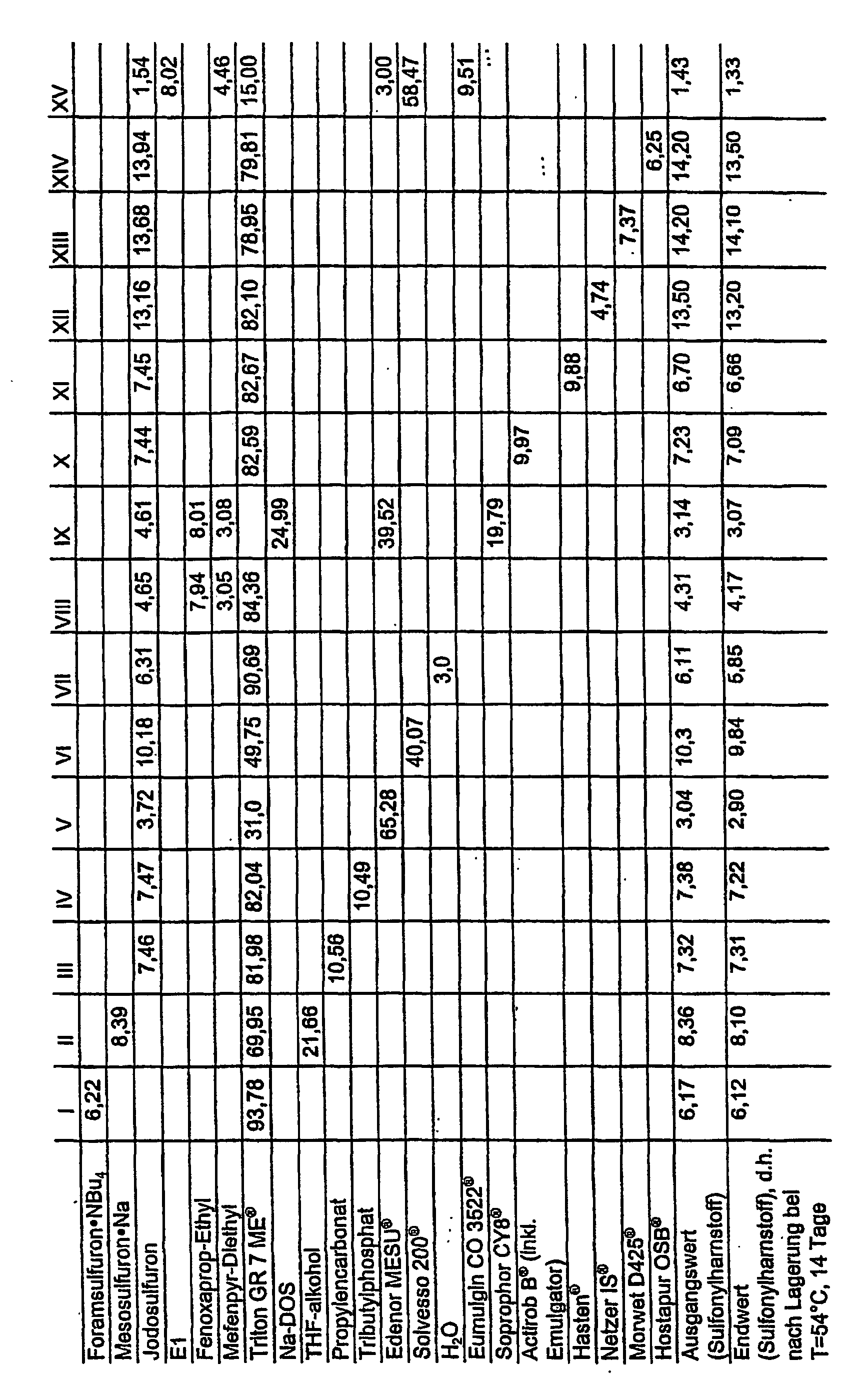

### Vergleichsbeispiele

Jodosulfuron, Fenoxaprop-Ethyl, Mefenpyr-Diethyl und Propylencarbonat wurden in den angegebenen Mengen gemischt. Die Ausgangswerte und Endwerte (g Jodosulfuron in der Formulierung) wurden mit HPLC bestimmt. Es wird keine stabile Formulierung erhalten, sondern ein bei Lagerung instabiles System - wie anhand von Tabelle 2 deutlich wird (Beispiel 1). Bei Zusatz einer tensidischen Komponente wie Genapol X-060® ist die Lagerstabilität noch geringer (Beispiel 2).

In Tabelle 2 beziehen sich die Zahlenangaben auf das Gewicht in Gramm.

**Tabelle 2:**

| Beispiele für Flüssigformulierungen, in denen es zum Abbau des Wirkstoffs während der Lagerung kommt | | |
|---|---|---|
| | 1 | 2 |
| Jodosulfuron | 1,40 | 1,40 |
| Fenoxaprop-Ethyl | 11,08 | 11,08 |
| Mefenpyr-Diethyl | 4,17 | 4,17 |
| Propylencarbonat | 83,35 | 73,35 |
| Genapol X-060® | | 10,0 |
| Ausgangswert (Jodosulfuron) | 1,29 | 1,35 |
| Endwert (Jodosulfuron), d.h. nach Lagerung bei T=54°C, 14 Tage | 0,32 | <0,05 |

## Patentansprüche

1. Flüssige Formulierung enthaltend a) ein oder mehrere Verbindungen aus der Gruppe der Geminitenside und/oder Sulfosuccinate und b) einen oder mehrere Wirkstoffe aus der Gruppe der Acetolactat-Synthetase - inhibitoren (ALS-Inhibitoren) in gelöster Form.

2. Flüssige Formulierung nach Anspruch 1, weiche als Komponente a) ein oder mehrere Verbindungen aus der Gruppe der Sulfosuccinate enthält.

3. Flüssige Formulierung nach Anspruch 1 oder 2, welche als Komponente b) einen oder mehrere Sulfonylharnstoffe in gelösten Form enthält.

4. Flüssige Formulierung nach einem oder Ansprüche 1 bis 3, welche als Komponente a) eine oder mehrere Verbindungen aus der Gruppe der Geminitenside der allgemeinen Formel (II) R⁵-CO-NA-R⁶-NB-CO-R⁷ oder (III) R⁵-O-CO-CH(SO³M)-R⁶-CH(SO³M)-CO-O-R⁷ enthält, worin
R⁵,R⁷ unabhängig voneinander gleich oder verschieden ein verzweigter oder unverzweigter, gesättigter oder ungesättigter Kohlenwasserstoffrest mit 1 bis 30 Kohlenstoffatomen bedeuten,
R⁶ ein "Spacer" aus einer unverzweigten oder verzweigten Kette mit 2 bis 100 Kohlenstoffatomen bedeutet, die 0 bis 20 Sauerstoffatome, 0 bis 4 Schwefelatome und/oder 0 bis 3 Phosphoratome enthält und die 0 bis 20 funktionelle Seitengruppen, aufweist und die 0 bis 100, Alkoxygruppen enthält,
A,B unabhängig voneinander gleich oder verschieden ein Polyalkylenoxidrest mit terminaler OH-, C₁-C₂₀-Alkyl-, Carboxyethyl-, Carboxymethyl-, Sulfonsäure-, Schwefelsäure-, Phosphorsäure- oder Betain-Gruppierung bedeuten, und
M ein Kation ist.

5. Flüssige Formulierung nach einem oder oder Ansprüche 1 bis 3, welche als Komponente a) eine oder mehrere Verbindungen aus der Gruppe der Sulfosuccinate der allgemeinen Formel (I) R¹-X-CO-CH₂-CH(SO₃R³)-CO-Y-R²) enthält, worin
R¹,R² unabhängig voneinander gleich oder verschieden H, ein unsubstituierter oder substituierter C₁-C₃₀-Kohlenwasserstoffrest oder ein (Poly) Alkylenoxidaddukt bedeuten,
R³ ein Kation ist, und
X,Y unabhängig voneinander gleich oder verschieden O oder NR⁴ bedeuten, worin R⁴ H, unsubstituierter oder substituierter C₁-C₃₀-Kohlenwasserstoffrest, Dicarboxyethyl oder ein (Poly) Alkylenoxidaddukt ist.

6. Flüssige Formulierung gemäß einen der Ansprüche 1 bis 5, enthaltend als Komponente b) ein oder mehrere Wirkstoffe aus der Gruppe der ALS-Inhibitoren in gelöster Form in Kombination mit einem oder mehreren von ALS-Inhibitoren verschiedenen Agrochemikalien.

7. Flüssige Formulierung, nach einem der Ansprüche 1 bis 6 enthaltend
(a) eine oder mehrere Verbindungen aus der Gruppe der Geminitenside und/oder sulfosuccinate
(b) einen oder mehrere Wirkstoffe aus der Gruppe der ALS-Inhibitoren in gelöster Form, vorzugsweise aus der Gruppe der Sulfonylhamstoffe, sowie ein oder mehrere weitere Komponenten ausgewählt aus der Gruppe bestehend aus
(c) zusätzlichen Tensiden und/oder Polymeren,
(d) organische Lösungsmittel,
(e) von ALS-Inhibitoren verschiedene Agrochemikalien,
(f) übliche Formulierungshilfsmittel,
(g) Tankmischkomponenten, und/oder
(h) Wasser.

8. Flüssige Formulierung nach einem der Ansprüche 1 bis 7, enthaltend
(a) 0,1 bis 80 Gew.-% einer oder mehrer Verbindungen aus der Gruppe der Geminitenside und/oder Sulfosuccinate,
(b) 0,001 bis 50 Gew.-% eines oder mehrerer Wirkstoffe aus der Gruppe der ALS-Inhibitoren in gelöster Form, vorzugsweise aus der Gruppe der Sulfonylhamstoffe,
(c) 0 bis 60 Gew.-% zusätzliche Tenside und/oder Polymere,
(d) 0 bis 90 Gew.-% organische Lösungsmittel,
(e) 0 bis 50 Gew.-% von ALS-Inhibitoren verschiedene Agrochemikalien,
(f) 0 bis 20 Gew.-% übliche Formulierungshilfsmittel und/oder
(h) 0 bis 50 Gew.-% Wasser.

9. Flüssige Formulierung nach einem der Ansprüche 1 bis 8, enthaltend
a) 10 bis 60 Gew.-% einer oder mehrer Verbindungen aus der Gruppe der Geminitenside und/oder Sulfosuccinate,
b) 1 bis 15 Gew.-% eines oder mehrerer Wirkstoffe aus der Gruppe der ALS-Inhibitoren in gelöster Form, vorzugsweise aus der Gruppe der Sulfonylharnstoffe,
c) 0 bis 50 Gew.-% zusätzliche Tenside und/oder Polymere,
d) 0 bis 30 Gew.-% organische Lösungsmittel,
e) 0 bis 50 Gew.-% von ALS-Inhibitoren verschiedene Agrochemikalien und/oder
f) 0 bis 10 Gew.-% übliche Formulierungshilfsmittel.

10. Flüssige Formulierung nach einem der Anprüche 1 bis 9 in Form einer Lösung, Dispersion oder eines Emulsionskonzentrats.

11. Verfahren zur Herstellung einer gemäß einem der Ansprüche 1 bis 10 definierten flüssigen Formulierung, **dadurch gekennzeichnet, daß** man die Komponenten miteinander vermischt.

12. Verfahren gemäß Anspruch 11, **dadurch gekennzeichnet, daß** man die Komponenten nach dem Vermischen vermahlt.

13. Verfahren zur Bekämpfung von unerwünschtem Pflanzenwuchs, **dadurch gekennzeichnet, daß** man eine wirksame Menge einer Formulierung gemäß einem der Ansprüche 1 bis 10, falls erforderlich nach Verdünnen mit Wasser, auf die Samen, Pflanzen, Pflanzenteile oder die Anbaufläche appliziert.

## Claims

1. A liquid formulation, comprising a) one or more compounds from the group of the gemini surfactants and/or sulfosuccinates and b) one or more active compounds from the group of the acetolactate synthase inhibitors (ALS inhibitors) in dissolved from.

2. The liquid formulation as claimed in claim 1, which comprises, as component a), one or more compounds from the group of the sulfosuccinates.

3. The liquid formulation as claimed in claim 1 or 2, which comprises, as component b), one or more sulfonylureas in dissolved form.

4. The liquid formulation as claimed in any of claims 1 to 3, which comprises, as component a), one or more compounds from the group of the gemini surfactants of the formula (II) R⁵-CO-NA-R⁶-NB-CO-R⁷ or (III) R⁵-O-CO-CH(SO³M)-R⁶-CH(SO³M)-CO-O-R⁷, in which
R⁵,R⁷ independently of one another are identical or different and are branched or straight-chain saturated or unsaturated hydrocarbon radicals having 1 to 30 carbon atoms,
R⁶ is a spacer of a straight-chain or branched chain having 2 to 100 carbon atoms which contains 0 to 20 oxygen atoms, 0 to 4 sulfur atoms and/or 0 to 3 phosphorus atoms and which has 0 to 20 functional side groups and which contains 0 to 100 alkoxy groups,
A,B independently of one another are identical or different and are polyalkylene oxide radicals having a terminal OH, C₁-C₂₀-alkyl, carboxyethyl, carboxymethyl, sulfonic acid, sulfuric acid, phosphoric acid or betaine grouping, and
M is a cation.

5. The liquid formulation as claimed in any of claims 1 to 3 which comprises, as component a), one or more compounds from the group of the sulfosuccinates of the formula (I) R¹-X-CO-CH₂-CH(SO₃R³)-CO-Y-R²) in which
R¹,R² independently of one another are identical or different and are H, substituted or unsubstituted C₁-C₃₀-hydrocarbon radicals or (poly)alkylene oxide adducts,
R³ is a cation and
X,Y independently of one another are identical or different and are O or NR⁴, where R⁴ is H, a substituted or unsubstituted C₁-C₃₀-hydrocarbon radical, dicarboxyethyl or a (poly)alkylene oxide adduct.

6. The liquid formulation as claimed in any of claims 1 to 5, comprising, as component b), one or more active compounds from the group of the ALS inhibitors in dissolved form in combination with one or more agrochemicals which are different from ALS inhibitors.

7. The liquid formulation as claimed in any of claims 1 to 6, comprising
(a) one or more compounds from the group of the gemini surfactants and/or sulfosuccinates,
(b) one or more active compounds from the group of the ALS inhibitors in dissolved form, preferably from the group of the sulfonylureas, and also one or more further components selected from the group consisting of
(a) additional surfactants and/or polymers,
(b) organic solvents,
(c) agrochemicals which are different from ALS inhibitors,
(d) customary formulation auxiliaries,
(e) tank mix components, and/or
(f) water.

8. The liquid formulation as claimed in any of claims 1 to 7, comprising
(a) from 0.1 to 80% by weight of one or more compounds from the group of the gemini surfactants and/or sulfosuccinates,
(b) from 0.001 to 50% by weight of one or more active compounds from the group of the ALS inhibitors in dissolved form, preferably from the group of the sulfonylureas,
(c) from 0 to 60% by weight of additional surfactants and/or polymers,
(d) from 0 to 90% by weight of organic solvents,
(e) from 0 to 50% by weight of agrochemicals which are different from ALS inhibitors,
(f) from 0 to 20% by weight of customary formulation auxiliaries and/or
(h) from 0 to 50% by weight of water.

9. The liquid formulation as claimed in any of claims 1 to 8, comprising
a) from 10 to 60% by weight of one or more compounds from the group of the gemini surfactants and/or sulfosuccinates,
b) from 1 to 15% by weight of one or more active compounds from the group of the ALS inhibitors in dissolved form, preferably from the group of the sulfonylureas,
c) from 0 to 50% by weight of additional surfactants and/or polymers,
d) from 0 to 30% by weight of organic solvents,
e) from 0 to 50% by weight of agrochemicals which are different from ALS inhibitors and/or
f) from 0 to 10% by weight of customary formulation auxiliaries.

10. The liquid formulation as claimed in any of claims 1 to 9 in the form of a solution, dispersion or an emulsion concentrate.

11. A process for preparing a liquid formulation as defined in any of claims 1 to 10, which comprises mixing the components with one another.

12. The process as claimed in claim 11, wherein the components are ground after mixing.

13. A method for controlling undesirable vegetation, which comprises applying an effective amount of a formulation as claimed in any of claims 1 to 10, if required after dilution with water, to the seeds, plants, parts of plants or the area under cultivation.

## Revendications

1. Formulation liquide contenant a) un ou plusieurs composés dans le groupe des tensio-actifs jumeaux et/ou des sulfosuccinates et b) une ou plusieurs substances actives dans le groupe des inhibiteurs d'acétoacétate synthétase (inhibiteurs ALS) sous forme dissoute.

2. Formulation liquide selon la revendication 1, qui contient comme composant a) un ou plusieurs composés dans le groupe des sulfosuccinates.

3. Formulation liquide selon la revendication 1 ou 2, qui contient comme composant b) une ou plusieurs sulfonylurées sous forme dissoute.

4. Formulation liquide selon une ou plusieurs des revendications 1 à 3, qui contient comme composant a) un ou plusieurs composés dans le groupe des tensio-actifs jumeaux de formule générale (II) R⁵-CO-NA-R⁶-NB-CO-R⁷ ou (III) R⁵-O-CO-CH(SO₃M)-R⁶-CH(SO₃M)-CO-O-R⁷, dans lesquelles
R⁵, R⁷ indépendamment l'un de l'autre, identiques ou différents, représentent un groupe hydrocarboné ramifié ou non ramifié, saturé ou insaturé avec de 1 à 30 atomes de carbone,
R⁸ représente un « espaceur » constitué d'une chaîne non ramifiée ou ramifiée avec de 2 à 100 atomes de carbone, qui contient 0 à 20 atomes d'oxygène, 0 à 4 atomes de soufre et/ou 0 à 3 atomes de phosphore et qui présente de 0 à 20 groupes latéraux fonctionnels et qui contient de 0 à 100 groupes alcoxy,
A,B indépendamment l'un de l'autre, identiques ou différents, représentent un groupe polyoxyde d'alkylène avec un groupement terminal OH-, alkyle en C₁-C₂₀, carboxyéthyle, carboxyméthyle, acide sulfonique, acide sulfurique, acide phosphorique ou bétaïne, et
M est un cation.

5. Formulation liquide selon une ou plusieurs des revendications 1 à 3, qui contient comme composant a) un ou plusieurs composés dans le groupe des sulfosuccinates de formule générale (I) R¹-X-CO-CH₂-CH(SO₃R³)-CO-Y-R², dans laquelle
R¹, R² indépendamment l'un de l'autre, identiques ou différents, représentent H, un groupe hydrocarboné en C₁ à C₃₀ non substitué ou substitué ou un adduit de (poly)oxyde d'alkylène,
R³ est un cation, et
X, Y indépendamment l'un de l'autre, identiques ou différents, représentent O ou NR⁴, dans lequel R⁴ représente H, un groupe hydrocarboné en C₁ à C₃₀ non substitué ou substitué, dicarboxyéthyle ou un adduit de (poly)oxyde d'alkylène.

6. Formulation liquide selon une des revendications 1 à 5, contenant comme composant b) une ou plusieurs substances actives dans le groupe des inhibiteurs d'ALS sous forme dissoute en combinaison avec un ou plusieurs composés agrochimiques différents des inhibiteurs d'ALS.

7. Formulation liquide selon une des revendications 1 à 6, contenant
(a) un ou plusieurs composés dans le groupe des tensio-actifs jumeaux et/ou des sulfosuccinates
(b) une ou plusieurs substances actives dans le groupe des inhibiteurs d'ALS sous forme dissoute de préférence dans le groupe des sulfonylurées, ainsi
qu'un ou plusieurs composants choisis dans le groupe constitué de
(c) tensio-actifs et/ou polymères additionnels,
(d) solvants organiques,
(e) composés agrochimiques différents des inhibiteurs d'ALS,
(f) adjuvants de formulation usuels,
(g) composants de mélange de citerne, et/ou
(h) l'eau.

8. Formulation liquide selon une des revendications 1 à 7, contenant
(a) 0,1 à 80 % en poids d'un ou de plusieurs composés dans le groupe des tensio-actifs jumeaux et/ou des sulfosuccinates
b) 0,001 à 50 % en poids d'une ou de plusieurs substances actives dans le groupe des inhibiteurs d'ALS sous forme dissoute, de préférence dans le groupe des sulfonylurées,
(c) 0 à 60 % en poids de tensio-actifs et/ou de polymères additionnels,
(d) 0 à 90 % en poids de solvants organiques,
(e) 0 à 50 % en poids de composés agrochimiques différents des inhibiteurs d'ALS,
(f) 0 à 20 % en poids d'adjuvants de formulation usuels, et/ou
(h) 0 à 50 % en poids d'eau.

9. Formulation liquide selon une des revendications 1 à 8, contenant
a) 10 à 60 % en poids d'un ou de plusieurs composés dans le groupe des tensio-actifs jumeaux et/ou des sulfosuccinates
b) 1 à 15 % en poids d'une ou de plusieurs substances actives dans le groupe des inhibiteurs d'ALS sous forme dissoute, de préférence dans le groupe des sulfonylurées,
c) 0 à 50 % en poids de tensio-actifs et/ou de polymères additionnels,
d) 0 à 30 % en poids de solvants organiques,
e) 0 à 50 % en poids de composés agrochimiques différents des inhibiteurs d'ALS et/ou
f) 0 à 10 % en poids d'adjuvants de formulation usuels.

10. Formulation liquide selon une des revendications 1 à 9 sous forme d'une solution, d'une dispersion ou d'un concentrat d'émulsion.

11. Procédé de préparation d'une formulation liquide définie selon une des revendications 1 à 10, **caractérisée en ce qu'**on mélange entre eux les composants.

12. Procédé selon la revendication 11, **caractérisé en ce qu'**on broie les composants après le mélange.

13. Procédé de lutte contre la croissance de plantes non souhaitées, **caractérisé en ce qu'**on applique une quantité efficace d'une formulation selon une des revendications 1 à 10, si nécessaire après dilution avec de l'eau, sur les semences, les plantes, des parties de plantes ou la surface cultivable.
